# EUROPEAN PATENT APPLICATION

(11) **EP 2 693 131 A2**
(43) Date of publication of application: **05.02.2014**
(21) Application number: 13179208.7
(22) Date of filing: 05.08.2013
(51) Int. Cl.: F24F 3/044

(54) **Building provided with louvers, as well as method for heating/cooling and ventilating such a builing**

(30) Priority: 03.08.2012 NL 2009283
(71) Applicant: Gerritsen van der Hoop, Willem Henri, 4461 EG Goes (NL); Fierloos, Nicolaas Marinus, 4194 WS Meteren (NL)
(72) Inventor: Gerritsen van der Hoop, Willem Henri, 4461 EG Goes (NL); Fierloos, Nicolaas Marinus, 4194 WS Meteren (NL)
(74) Representative: Verhees, Godefridus Josephus Maria

(57) **Abstract**

A building 100 comprises ventilation devices 104 installed in exterior walls and/or over or under exterior windows and further includes a central extraction system 110. The ventilation devices each have an inlet 202 for outside air and an outlet 204 for delivering to the building outside air drawn in through the inlet, where a chamber 205 is located between the inlet and the outlet, which chamber is provided with an electric heating/cooling element 206.

There are no ventilators present in the ventilation devices 104 and the ventilation devices cannot be closed manually.

The heating elements 206 in the ventilation devices preferably constitute the main heating system of the building.

The ventilation devices 104 each have a valve and a control unit which closes the valve only if a high concentration of noxious gases is detected in the outside air.

## Description

### Field of the invention

The invention relates to a building comprising ventilation devices installed in exterior walls and/or over or under exterior windows, which ventilation devices each comprise an inlet for outside air and an outlet for delivering to the building outside air drawn in through the inlet, where a chamber is located between the inlet and the outlet, which chamber is provided with a heating/cooling element, which ventilation devices do not comprise ventilators and are adjustable between a fully open state and a fully closed state.

To ensure that a space such as a room receives a sufficient amount of fresh air (at least the legally required amount of air) such a space is provided with a ventilation opening. A problem occurs when it is relatively cold outside, such as during a period of frost, as a result of which a person who is present in the space experiences an unpleasant air flow also known as draft. This then leads to diminished comfort in the space. It may also lead to higher energy consumption since in that case the heating is turned up by way of compensation. The same goes if it is rather warm outside and an unpleasant warm air flow infiltrates from the outside.

### State of the art

A building comprising ventilation devices provided in exterior walls and/or over or under exterior windows, where heating elements are accommodated in the ventilation devices, is known from DE 34 19 001. The heating elements are electric heating elements and have for their object to prevent a cold draft.

By providing the ventilation devices with heating elements, the air temperature is adapted in a purpose oriented manner at the location where the problem may arise. This is to say that only the temperature of the supplied air is raised as a result of which the air flow becomes less or no longer noticeable in a comfort reducing manner. Heating the supplied fresh air in the ventilation devices can be realized with less energy than would be consumed if the normal heating, such as under-floor heating, a radiator or the like would be used. If the overall temperature of the space were raised only by means of normal heating, the difference in temperature would become greater with the cold, fresh air drawn in from outside so that the draft would locally be even more noticeable.

### Summary of the invention

It is an object of the invention to improve the ventilation in a building of the type defined in the opening paragraph. For this purpose the building according to the invention is **characterized in that** the building comprises a central extraction system and in that the ventilation devices are provided with resistance increasing means which are positioned such that the ventilation device is adjustable between an open state and a partially closed state in which the ventilation device experiences increased resistance to further adjustment of the device to the fully closed state. The resistance increasing means may be present for example in the capacity of friction increasing means or a shear pin. Only in the case of a calamity and at the same time a doubling of the electronic protection for closing the device is it possible to close the devices manually. The central extraction system creates under-pressure in the building as a result of which a larger air flow and thus a better ventilation is realized. This air flow is guaranteed because the ventilation devices cannot easily/simply be closed manually. In addition, the inside climate is improved by continuously open ventilation devices, which is beneficial to health. The legally required ventilation standards can also continuously be met. By directly heating the air that has been drawn into the ventilation system before it flows into the building, ventilation is acceptable even in colder periods. Besides heating elements it is also possible for cooling elements to be installed in the ventilation devices for cooling the air in times of higher outside temperatures. The ventilation device is arranged such that in case of power failure the devices can manually be opened completely.

An advantageous embodiment of the building according to the invention is **characterized in that** the heating elements in the ventilation devices constitute the main heating system of the building. Main heating system is understood to be the heating system that provides for more than half of the total heating capacity of the building. The great risk of people suffocating because of carbon monoxide from a gas heating or gas explosion when natural gas infiltrates into the house is no longer there when the building comprises only ventilation devices according to the invention for meeting the total energy requirement.

The ventilation devices may be installed over a window of the room, while the heated air leaving the outlet has a maximum temperature of 25°C, and preferably maximum 22°C, and more preferably between 14 and 20°C.

Air heated by the ventilation device and having a temperature exceeding the temperature indicated above no longer falls down, it is true, but if this heated air remains hanging against the ceiling, the electrically supplied heat is poorly used because that heat is not felt by a person present in the room. There is also the risk that the supplied fresh, heated air continues to hang close to the ceiling and is directly centrally extracted.

The ventilation devices may also be installed under a window of the room, while the temperature of the air is higher than 22°C, preferably higher than 25°C.

As a result, the cold that may be palpable by the window may become less palpable since the heated air rises up past the window. Since the window is palpably less cold, the temperature in the room may be lower, which saves energy. Installing the ventilation device under a window may also imply an installation under the window-sill of this window. The air outlet of the device then preferably extends over at least 50%, more preferably over at least 75% and even more preferably over at least 90% of the width of the window.

A further embodiment of the building according to the invention is **characterized in that** the ventilation devices each comprise a valve as well as a control unit which only closes the valve if a high concentration of noxious gases in the outside air is detected. In consequence, the risk of suffocation in case of fire in the building or intoxication by toxic gases from outside diminishes considerably. Furthermore, the control unit in conjunction with a thermostatic air temperature control can also control the level of air humidity and/or the CO₂ content in the building and in case of a (too) high concentration in the building open the valve more while being automatically controlled. As a result, the air properties inside the building continue to remain at a desirable, acceptable and, if needed, required level.

The heating element is preferably an electric low-voltage heating element of preferably 50V or less. As a result, no additional safety precautions need be taken. Another form of the heating/cooling element is by means of transport of hot or cold water. The energy is supplied or delivered respectively to the air by means of for example a heat sink. The heating/cooling source is then located at a different spot.

The invention also relates to a method of heating/cooling and ventilating a building which is provided with ventilation devices in exterior walls, comprising the mechanical extraction of air from the building, so that an under pressure evolves in the building causing outside air to be drawn in through the ventilation devices and the incoming air being heated/cooled in the ventilation devices by heating/cooling elements.

Preferably, the outside air is drawn in through the ventilation devices only for creating under-pressure in the building.

Furthermore, preferably the air pollution is measured and only if the concentration of noxious gas exceeds a predetermined limit value will the ventilation devices be closed. In case of power failure, such as for example in case of fire, the ventilation devices close autonomously.

An advantageous embodiment of a ventilation device is a version in which dust and fine dust particles are extracted from the outside air by means of an electrostatic filter system. This may help to avoid smog infiltrating into a building. It is possible that the valve is not closed then since the electrostatic fine dust filter system extracts soot and fine dust particles with a very high efficiency. Harmful material then does not have the chance of infiltrating into the building.

An advantageous embodiment of the method according to the invention is **characterized in that** the temperature of different spaces in the building is measured and the temperature for each one of these spaces in the building is controlled separately. By utilizing control electronics and because of the presence of a plurality of sensors in a building the temperature in the building can be controlled per space. Combined with the fast way of heat input through the ventilation device this offers the possibility of controlling the temperature in the building per space, which results in a reduction of the total energy consumption of a building.

### Brief description of the drawings

The invention will now be described in more detail below based on an example of embodiment of the building according to the invention while reference is made to the appended drawing figures, in which:
Fig. 1 represents an exploded, perspective view of a building provided with central air extraction and ventilation devices according to the invention; and
Fig. 2 represents a sectional view through a ventilation device of the building installed in an exterior wall.

### Detailed description of the drawings

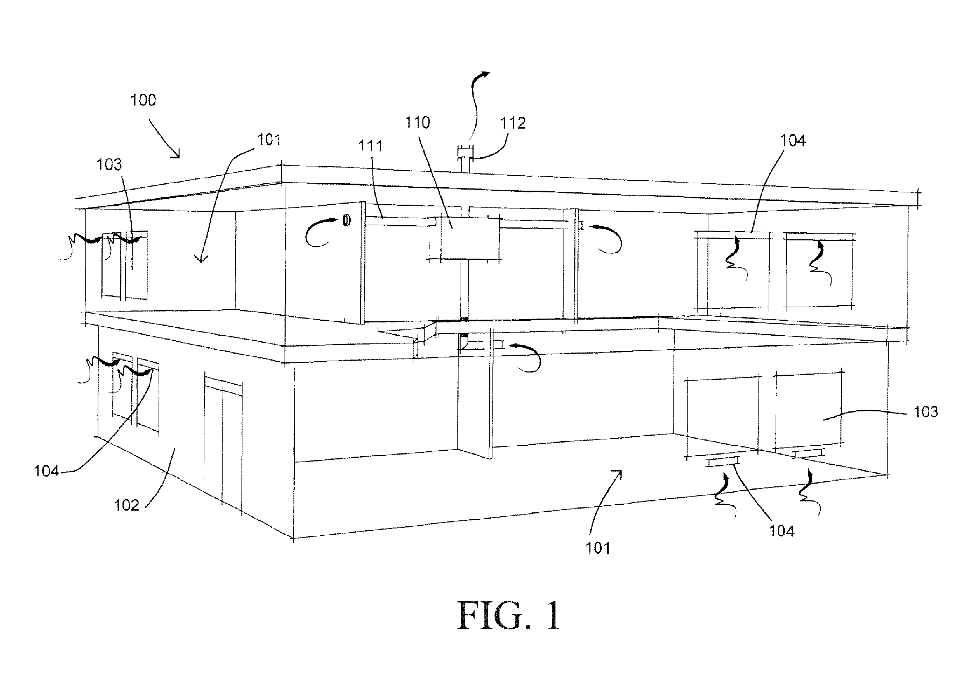

Fig. 1 shows an office building 100 comprising various spaces 101 which are bounded by an exterior wall 102. The exterior wall 102 comprises windows 103 and over or under the windows 103 are provided elongated ventilation devices 104 which preferably extend over the entire width of the window concerned 103.

The building 100 is equipped with a central air extraction system 110 by which via ducts 111 air is extracted from the spaces 101 and is discharged of from the building through an outlet 112. Not every space 101 need be connected to a duct 111. It is also possible for air to be extracted at one or more locations such as a bathroom where air is extracted from the space through an interstice at the bottom of a door that gives access to a space 101.

The air in the spaces 101 is supplemented via the ventilation devices 104. In this manner each space 101 is supplied with fresh air.

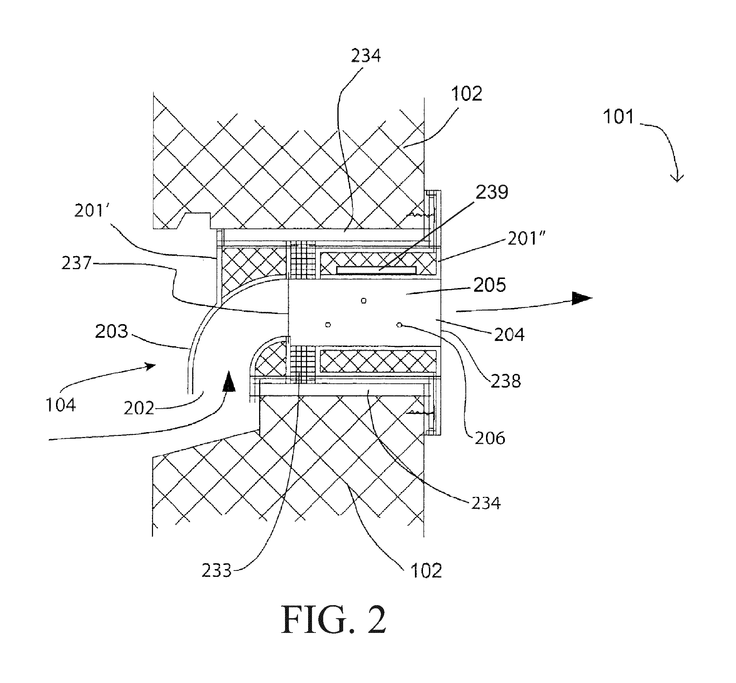

Fig. 2 shows a sectional view through a ventilation device 104 according to the invention directly installed in the exterior wall 102. In lieu of this the device may alternatively be installed in a window frame.

The ventilation device 104 comprises a cabinet 201 having an elongated inlet 202 which is pointed downwards by the presence of guard plate 203 to eliminate rain coming in. The cabinet 201 further includes a longitudinal outlet 204 which gives on the space 101. Between the inlet 202 and the outlet 204 is located a chamber 205 which is provided with an electric heating element 206. This electric heating element 206 has the form of for example a spiral filament, or a resistance provided with a fin, which fin heats up the air in that the air flows past or through this fin. The fin has the shape of for example gauze. The heating element 206 will be placed such that it extends over the entire length of the chamber 205, or there are a number of heating elements 206 which are distributed over the length of the chamber 205 so as to provide that substantially all air coming in through the inlet 202 is heated.

During operation the temperature of the heating element 206 is preferably low so as to avoid the occurrence of an odour. This may simply be achieved by enlarging the surface of the heat exchange of the electric heating element 206.

The mechanical discharge of air through the interstices at the bottom of the door(s) via for example a hall to a bathroom in which there is an inlet opening for duct 111, a flow and air circulation evolves in the space 101 and the air is refreshed everywhere. As a result of the air heated by the ventilation device 104 the energy is delivered at exactly the spot where it is required to avoid a draft and enhance comfort. Thus there will be less inclination to turn up the heating system in case of a draft.

In the embodiment shown in Fig. 2 the cabinet 201 comprises a first section 201', which includes the inlet 202, and a second section 201", which includes the outlet 204. The first section 201' and the second section 201" are thermally separated from each other by means of a thermally insulating partition 233, for example made of plastic. In this way heat conduction of the space and loss of heat coming from the electric heating element 206 is confined by conduction. For counteracting loss of heat to the exterior wall 102, a wasted space 234 may be provided, which may be filled with insulation material if desired.

The device may be provided with gauze 238 for damping the effects of wind and/or protecting the electric heating element 206.

The ventilation device 104 further includes a valve 237 (shown diagrammatically) and a control unit 239 which closes the valve only if a high concentration of noxious gases in the outside air is detected. When the valve is closed, the heating element is switched off automatically. This valve cannot be closed manually.

Albeit in the foregoing disclosure the invention has been explained with reference to the drawing figures, it should be pointed out that the invention is by no means restricted to the embodiments shown in the drawing figures. The invention also pertains to all embodiments deviating from the embodiments shown in the drawing figures within the scope defined by the claims.

## Claims

1. A building (100) comprising ventilation devices (104) installed in exterior walls and/or over or under exterior windows, which ventilation devices each comprise an inlet (202) for outside air and an outlet (204) for delivering to the building outside air drawn in through the inlet, where a chamber (205) is located between the inlet and the outlet, which chamber is provided with a heating/cooling element (206), which ventilation devices do not comprise ventilators and are adjustable between a fully open state and a fully closed state, **characterized in that** the building comprises a central extraction system (110) and **in that** the ventilation devices are provided with resistance increasing means which are positioned such that the ventilation device is adjustable between an open state and a partially closed state in which the ventilation device experiences increased resistance to further adjustment of the device to the fully closed state.

2. A building (100) as claimed in claim 1, **characterized in that** the heating elements (206) in the ventilation devices (104) constitute the main heating system of the building.

3. A building (100) as claimed in claim 1 or 2, **characterized in that** the ventilation devices (104) each comprise a valve (237) as well as a control unit (239) which closes the valve only if a high concentration of noxious gases outside the building is detected.

4. A building (100) as claimed in claim 1, 2 or 3, **characterized in that** the heating element (206) is an electric low-voltage heating element of preferably less than 24V.

5. A method of heating/cooling and ventilating a building which is provided with ventilation devices in exterior walls, comprising the mechanical extraction of air from the building, so that an under-pressure evolves in the building which cause outside air to be drawn in through the ventilation devices and the incoming air is heated/cooled in the ventilation devices by heating/cooling elements.

6. A method as claimed in claim 5, **characterized in that** the outside air is drwn in through the ventilation devices only with the object of creating under-pressure in the building.

7. A method as claimed in claim 5 or 6, **characterized in that** the air pollution is measured and only if the concentration of a noxious gas exceeds a predetermined limit value will the ventilation devices be closed.

8. A method as claimed in claim 5, 6 or 7, **characterized in that** in case of power failure, such as in case of fire, the ventilation devices close by themselves.

9. A method as claimed in claim 5, 6, 7 or 8, **characterized in that** the temperature of different spaces in the building is measured and the temperature is controlled separately for each one of these spaces.
